# EUROPEAN PATENT SPECIFICATION

(11) **EP 3 411 415 B1**
(45) Date of publication and mention of the grant of the patent: **01.07.2020**
(21) Application number: 17705965.6
(22) Date of filing: 01.02.2017
(51) Int. Cl.: C08B 1/00, C08B 16/00, C08J 11/08, D21H 11/20, D01F 2/00, D21H 11/12, D21H 11/14, D21H 13/08, D01F 1/10

(54) **METHOD FOR PRODUCING REGENERATED CELLULOSE FIBERS FROM COTTON CONTAINING TEXTILE WASTE**
VERFAHREN ZUR HERSTELLUNG VON REGENERIERTEN CELLULOSEFASERN AUS BAUMWOLLHALTIGEN TEXTILABFÄLLEN
PROCÉDÉ DE PRODUCTION DE FIBRES DE CELLULOSE RÉGÉNÉRÉES À PARTIR DE DÉCHETS TEXTILES CONTENANT DU COTON

(30) Priority: 01.02.2016 NL 2016190
(43) Date of publication of application: 12.12.2018
(73) Proprietor: SaXcell B.V., 7581 BZ Losser (NL)
(72) Inventor: BRINKS, Gerrit Johannes, 7604 CG Almelo (NL); BOUWHUIS, Gerhard Herman, 7581 BZ Losser (NL); AGRAWAL, Pramodkumar Bhagwandas, 7521 HW Enschede (NL); GOOIJER, Hendrik, 6824 AM Arnhem (NL); OELERICH, Jens Josef, 48607 Ochtrup (DE)
(74) Representative: V.O.
(86) International application number: PCT/NL2017/050062
(87) International publication number: WO 2017/135816

(56) References cited:
- EP-A1- 0 952 243
- EP-A1- 2 853 635
- WO-A1-2014/081291
- US-A- 3 937 675
- Anna Peterson: "Towards Recycling of Textile Fibers Separation and Characterization of Textile Fibers and Blends Master's thesis in Materials Chemistry and Nanotechnology", , 1 January 2015 (2015-01-01), XP055283288, CHALMERS UNIVERSITY OF TECHNOLOGY, Gothenburg, Sweden 2015 Retrieved from the Internet: URL:http://publications.lib.chalmers.se/re cords/fulltext/218483/218483.pdf [retrieved on 2016-06-23]
- Zoan I Negulescu ET AL: "Recycling Cotton from Cotton/ Polyester Fabrics", Textile Chemist and Colorist, 1 June 1998 (1998-06-01), pages 31-35, XP055305945, Retrieved from the Internet: URL:http://infohouse.p2ric.org/ref/31/3059 7.pdf [retrieved on 2016-09-27]
- AKIHIKO OUCHI ET AL: "A new methodology to recycle polyester from fabric blends with cellulose", CELLULOSE, KLUWER ACADEMIC PUBLISHERS (DORDRECHT), NL, vol. 17, no. 1, 27 August 2009 (2009-08-27), pages 215-222, XP019767576, ISSN: 1572-882X
- SHOJAEI K M ET AL: "Recycling of Cellulosic Fibers by Enzymatic Process", APPLIED BIOCHEMISTRY AND BIOTECHNOLOGY ; PART A: ENZYME ENGINEERING AND BIOTECHNOLOGY, HUMANA PRESS INC, NEW YORK, vol. 166, no. 3, 13 December 2011 (2011-12-13), pages 744-752, XP035012156, ISSN: 1559-0291, DOI: 10.1007/S12010-011-9463-0
- DONG BOK KIM ET AL: "DRY JET-WET SPINNING OF CELLULOSE/N-METHYLMORPHOLINE N-OXIDE HYDRATE SOLUTIONS AND PHYSICAL PROPERTIES OF LYOCELL FIBERS", TEXTILE RESEARCH JOURNAL, SAGE PUBLICATIONS, LONDON, GB, vol. 75, no. 4, 1 April 2005 (2005-04-01), pages 331-341, XP001228162, ISSN: 0040-5175, DOI: 10.1177/0040517505054852
- CHANZY H ET AL: "Spinning of cellulose from N-methyl morpholine N-oxide in the presence of additives", POLYMER, ELSEVIER SCIENCE PUBLISHERS B.V, GB, vol. 31, no. 3, 1 March 1990 (1990-03-01), pages 400-405, XP024120598, ISSN: 0032-3861, DOI: 10.1016/0032-3861(90)90376-A [retrieved on 1990-03-01]

## Description

The invention relates to the field of regeneration of cellulose fibers from cotton textile, particularly cotton textile waste.

Regenerated fibers become increasingly popular as a sustainable alternative to the natural fibers such as cotton. In a world where millions of tons of waste textile fibers are produced annually, cotton waste textile is a well available source of cellulose that can be regenerated. One of the known methods contains a step wherein cellulose from waste textile is dissolved by using a cellulose solvent. The obtained cellulose solution can further be used in a wet spinning step to produce cellulose fibers.

However, the cellulose present in cotton waste textile or as solubilized with a cellulose solvent generally has a too high degree of polymerization (DP) for the spinning process. The DP of the cellulose in waste cotton will normally vary from 1500-2200, but can be as high as 3000. With such a high DP, the viscosity of the spinning solution will also be high, which will limit the spinnability of the solution. Reducing the viscosity by lowering the cellulose content, to make the spinning solution spinnable again, will lead to an economically less favorable process. For spinning purposes, a lower DP is therefore required, such as under 1500.

It is therefore desirable to provide a method for regeneration of cellulose fibers, which makes it possible to use cellulose from waste cotton for spinning purposes. Preferably, the method does not require aggressive chemicals or complicated procedures, is fast, economical and can easily be applied on an industrial scale.

In order to better address one or more of the foregoing desires, the invention relates to, in one aspect, a method for regenerating cellulose fibers from cellulose-containing textile, comprising the steps of:
(a) decreasing the degree of polymerization (DP) of cellulose to under 1500 with a DP decreasing agent, wherein the DP decreasing agent contains an endo-cellulase
(b) adding a cellulose solvent comprising an amine oxide to obtain a cellulose-containing liquid,
(c) subjecting the cellulose-containing liquid to a cellulose spinning process to produce cellulose fibers.

Provided is a method for producing regenerated cellulose fibers from cotton-containing waste textile comprising cellulose having a degree of polymerization (DP) within the range of 1500-3000, preferably 1500-2200, comprising the steps of:
(a) decreasing the DP of cellulose from waste cotton to under 1500 by subjecting cotton-containing waste textile to an endocellulase enzyme of the type EC 3.2.1.4 and applying mechanical energy;
(b) adding a cellulose solvent comprising *N*-methyl morpholine *N*-oxide (NMMO) or an aqueous mixture of NMMO to obtain a cellulose-containing liquid, and
(c) subjecting the cellulose-containing liquid to a cellulose spinning process to produce regenerated cellulose fibers.

The invention, in a broad sense, is based on the unexpected finding that the DP of cellulose can be decreased to the values suitable for spinning by using an endo acting enzyme of the type EC Number 3.2.1.4 in combination with mechanical energy. Preferably, the treatment with the enzyme is done before the cellulose dissolution step, as a pre-treatment of cellulose. Preferably, the treatment with the endo acting enzyme is combined (i.e. performed simultaneously) with the addition of mechanical energy. Applying mechanical energy preferably comprises applying a high shearing or impact energy.

A method of the invention is not taught or suggested in the prior art.

Peterson et al. (2015; Towards recycling of textile fibers, Chalmers Univ. of Technology) described a process in which cotton is treated with alkaline to lower DP and remove PET. Akihiko Ouchi et al. (2009, "A new methodology to recycle polyester form fabric blends with cellulose") relates to the acid treatment of cotton to lower DP. No enzymes are used to reduce the DP of cotton textile waste to a DP of below 1500.

Shojaei et al., (2011, Applied Biochem, and Biotechn. 166. No 3. pp. 744-752) discloses the enzymatic treatment of cellulose waste to shorten fibers to enable to use it as raw material in the paper making industry. Nothing is mentioned about the combined action of endoglucanase and mechanical energy to reduce DP to enable economic process for spinning cellulose fibers from cotton waste.

WO2014/081291 discloses the use of an acid, an oxidising agent or a cellulase as solubilisation enhancer in the treatment of cotton waste textile. It is silent about the specific use of an endo-acting enzyme EC 3.2.1.4 in combination with applying mechanical energy.

EP 2853635A discloses the beneficial effect of endo-glucanase in combination with exo-cellulases in a specific ratio to achieve increased fibrillation and to produce long length cellulose nanofibers. It is silent about the use of endo-acting enzyme EC 3.2.1.4 in combination with mechanical action on cotton-containing waste textile comprising cellulose to adjust the DP <1500 to obtain cellulose suitable for spinning.

In DE 4439149A1, a process is claimed to improve to dissolution of cellulose using cellulase enzymes without a decrease in DP, thus teaching away from the present invention.

In the present invention any cellulose containing material can be used as a starting material. The starting material is preferably a waste cotton material. The waste cotton may originate from various sources such as used garments, cloths, low grade cotton, excess from textile factories, etc. The invention is particularly advantageous for cotton textile materials containing at least 85 wt.%, preferably at least 90 wt%, like at least 95 wt.%, more preferably at least 99 wt.% and most preferably (substantially) 100 wt.% cellulose. Such high cellulose materials (and preferably containing 100 wt.% cellulose) can be treated according to the invention without extra filtration steps or an additional pretreatment, which makes the whole process simple and economic. Cellulose fibers in the textile are present in the form of cotton.

The starting material can also be a blend of cellulose with synthetic fibers such as polyester. An advantage of the method when applied to cotton-polyester blends as the starting material is that the cellulose fibers can be completely reused from the blend, due to the presence of a cellulose dissolution step. Under "synthetic fibers" man-made fibers are understood that are chemically modified, e.g. synthesized from monomers. The synthetic fibers in the present invention can for example be polyester (such as polyethylene terephthalate (PET)), polypropylene, polyamides, elastane, etc. The blend textile can comprise yarns of the same composition, being a blend of cotton and synthetic fibers, or it can have yarns of different composition, e.g. separate cotton and synthetic yarns. The invention can be applied to substantially 100% cotton textiles, cotton-synthetic fiber blends, and especially to cotton-polyester blend textiles, which represent the largest group of textile waste.

In a preferred yet optional embodiment, the cotton textile undergoes a size reduction treatment before the dissolution step. Typically, textile materials containing cotton, fabric, yarn, fibers have a fiber length >5 mm to 100 mm. During the size reduction step the fiber length is reduced to 5 mm or less. Size reduction can suitably be done in a cutting mill or a shredder. The size is determined by using a sieve in the mill with a predetermined screen size. The fibers are preferably decreased in length to values 0.01-5 mm, to obtain fine fiber or powder.

It has been observed by the inventors that the use of such short fibers avoids the problems during the later steps of the process, which is believed to be caused by large conglomerates of cellulose fibers otherwise formed in the system. Without wishing to be bound by theory, large conglomerates appear difficult to dissolve and they hinder the spinning process. Filtering of cellulose solutions is not desired as this would need to be performed at high temperature and in oxygen-free conditions. Decreasing the starting fiber size has been found a simple solution to avoid problems during the DP reduction and cellulose spinning steps.

An important aspect of the invention is achieving a decrease of the DP of cellulose from the starting material which typically has a DP of above 1500. A high DP leads to high viscosities, which limits the cellulose content in the spinning solution and therefore leads to an economically less advantageous process. On the other hand, it was found that a low DP has a negative effect on the mechanical properties of the regenerated cellulose. The DP of cellulose is therefore adjusted to a value under 1500, preferably in the range 300-1200, more preferably in the range 500-1000, yet more preferably 600-800.

For starting materials comprising only natural fibers, the DP is suitably measured according to the DIN 54270 standard test. For starting materials of cotton textile blends, the DIN 54270 standard test is readily adapted by including a step of separating non-natural fibers from the cellulose solution by filtration. The weight of the non-natural fibers is afterwards subtracted from the sample weight. By this means the weight of the natural fibers in the solution can be determined. As the dissolving procedure of the cellulose itself is not altered and the DP will not alter by filtration, the adapted procedure has no effect on the DP of the cellulose The DP decreasing agent is added before the cellulose dissolution step. For the DP decrease a DP decreasing agent is used, which is an endo-cellulase having the Enzyme Commission (EC) Number 3.2.1.4.

According to the invention, an enzyme which is an endo-cellulase EC Number 3.2.1.4 is used as the DP decreasing agent. It has been observed by the inventors that endo-cellulase is much more effective in decreasing the DP of cellulose than exo-cellulase. Without wishing to be bound by any theory, the inventors believe that exo-cellulase, by acting on the outer ends of the cellulose chains, is more effective in enhancing solubility of cellulose but not so effective in decreasing the degree of polymerization. In contrast, endo-cellulase is able to cut the cellulose chains more in the interior of the chains and is hence effective in decreasing the DP of cellulose. Additionally, cutting the cellulose chains more in the interior of the chains leads to less production of water soluble parts and by this increases the recovered amount of starting material after the described process. Preferably, endo-acting cellulase of the type endo-1,4-β-D-glucanase is used. Suitable examples include endo-1,4-β-D-glucanase from *Aspergillus* sp., EC Number 3.2.1.4, Sigma Aldrich.

It has additionally been observed by the inventors that mechanical energy is beneficial for the efficient reduction of the DP. This mechanical energy can be preferably but not exclusively applied by high shearing forces e.g. by a dissolving stirrer or by impact energy e.g. ball mill. In a specific embodiment, a method of the invention comprises treatment with endocellulase EC 3.2.1.4 in the presence of stainless steel balls. Without wishing to be bound by any theory, the inventors believe that mechanical energy is needed in the DP reducing step due to the following reasons: (i) mechanical energy increases the accessibility of the fibers by the removal of the outer shells of the fibers and by converting crystalline regions in the fibers into amorphous regions, (ii) the mechanical energy can help the endo acting enzyme to attach to the substrate and detach from the substrate; and (iii) the mechanical energy can overcome any unwanted clustering of enzymes in the reaction mixture.
Only the combination of endo-cellulase and mechanical energy leads to a efficient reduction of the DP.

In the next step, the cotton containing textile is treated with a cellulose-dissolving solvent to obtain a cellulose-containing liquid, or a cellulose solution. The use of the cellulose solvent preferably does not result in a DP being changed to a large extent (more than 5%). Therefore, preferably solvents and/or conditions are used so as to convert cellulose into a non-fibrous condition (cellulose solution). The cellulose hence retains its molecular structure and can be reused in fiber applications again. This is advantageously achieved using the amino oxide *N*-methyl morpholine N-oxide (NMMO), or a mixture thereof with water. The preferred solvent is NMMO , as it is less aggressive and is easy in handling compared to other solvents. Particularly suitable are aqueous amino oxides, especially NMMO in mixtures with water.

The mixture of cellulose and the solvent is then preferably heated to a temperature in the range 40-120°C to allow the dissolution of cellulose. A skilled person can easily determine suitable conditions for achieving cellulose dissolution. As an example, typical dissolution times are from 1 to 90 min, preferably 30-60 min. Preferably, the mixture is heated to a temperature 85-100°C during the dissolution step. The temperatures above 100°C may cause yellowing of the solution, while below 85°C the viscosity of the solution may be inconveniently high. Dissolution is preferably done in oxygen-free conditions.

As a result of the solubilization, the cellulose from the starting material is present as a cellulose solution (dope). Preferably, the dope contains at least 5 wt.% cellulose, more preferably at least 8 wt.%, yet more preferably in the range 10-17 wt.%. This latter range has a sufficient cellulose concentration for efficient and economic fiber production and on the other hand, high viscosities of the solution are avoided which are characteristic for anisotropic solutions at high concentrations. If NMMO is used as a cellulose solvent, the dope preferably contains 10-17 wt.% cellulose, 5-15 wt.% water, the rest being NMMO. The composition of the cellulose solution can however be varied in broader ranges, such as 0.5-35 wt.% cellulose, 0-25 wt.% water and 40-90 wt.% NMMO, more preferably, 1-30 wt.% cellulose, 0.1-20 wt.% water and 50-85 wt.% NMMO.

If the starting cotton textile is a blend with synthetic fibers, the latter are typically not affected by the treatment with a cellulose solvent. In that case an additional separation step may be necessary to separate the cellulose solution from the synthetic fibers. For this purpose, physical separation processes as precipitation, phase separation or centrifugation are particularly suited.

For producing cellulose fibers from the cellulose solution any conventional cellulose spinning process can be used. An example of a suitable cellulose spinning process is a Lyocell process. In such process, a cellulose solution is pumped through spinnerets. The spinneret is pierced with small holes; when the solution is forced through these, long strands of fiber come out. The fibers are then immersed in another solution of an amino oxide, which sets the fiber strands. The formed fibers are then washed and dried. The strands can further be treated in a finishing area where e.g. lubricants are applied to the fibers. The NMMO or an aqueous mixture of NMMO used to dissolve the cellulose and set the fiber is recycled after spinning; typically up to 98% of the NMMO is recovered. Since there is little waste product, this process is relatively eco-friendly.

For the purpose of clarity and a concise description features are described herein as part of the same or separate embodiments, however, it will be appreciated that the invention also includes embodiments having combinations of all or some of the features described. The invention will be now illustrated on basis of the following examples, which do not intend to limit the scope of the claims. The parts and percentages are by weight unless indicated otherwise.

The invention is illustrated by the Examples below.

### Example 1: Enzymatic reduction of the DP

### Method

In this example, 500 mg cellulose sample of fine industrial cotton waste with an initial DP of 1967 was weighed and added into a 50 ml plastic tube. 20 ml of buffered enzyme solution (enzymes are specified below) was prepared and poured over the cellulose in the tube. The mechanical energy was supplied by adding 10 V4A steel balls with a diameter of 6 mm to the tube and the tube was placed into a 500 ml beaker a beaker dyeing system LABOMAT, Mathis AG. In total, two centrifuge tubes were placed in one beaker and the beaker was filled with warm water for heat transfer. The metal beakers were placed into the beaker dyeing system LABOMAT, Mathis AG. The reaction mixture was rotated for 6 hours at 40 rpm at the indicated temperature.

After the indicated time the cellulose was filtered off on a glass filter, washed with 5x 20 ml soft water and 3 x 10 ml acetone and dried on air. The DP of the cellulose sample was then determined according to DIN 54270.

### Results:

When exo-acting cellulase (Cellobiohydrolase I from Hypocrea jecorina, EC Number 3.2.1.91 Sigma Aldrich, process conditions: 7.7 U for 500 mg cellulose, 100 mM acetate buffer, pH 5.0, 50°C) is used as the enzyme, the measured DP is 1869 (-5%). Hard clusters of fibers are formed and the cellulosic sample is not well dispersed in the buffer.

When endo-acting cellulase (endo-1,4-β-D-Glucanase from *Aspergillus* sp., EC Number 3.2.1.4, Sigma Aldrich, process conditions 7.7 U for 500 mg cellulose, 100 mM phosphate buffer, pH 7.0, 50°C) is used as the enzyme, the measured DP is 1435 (-27%). The cellulosic sample is finely dispersed in the buffer.

When endo-acting cellulase (EC Number 3.2.1.4, NS59006, Novozymes, process conditions: 4% on sample weight, 100 mM phosphate buffer, pH 7.0, 45°C) is used as the enzyme, the measured DP is 1208 (-39%). The cellulosic sample is finely dispersed in the buffer.

### Example 2: Synergistic effect of enzymes and mechanical action.

### Method:

In this experiment, 500 mg cellulose sample of fine industrial cotton waste with an initial DP of 1740 was weighed and added into a 50 ml plastic tube. 20 ml of buffered enzyme solution (enzymes are specified below) was prepared and poured over the cellulose in the tube. The mechanical energy was supplied by adding 10 V4A stainless steel balls with a diameter of 6 mm to the tube and the tube was placed into a 500 ml beaker a beaker dyeing system LABOMAT, Mathis AG. In total, two centrifuge tubes were placed in one beaker and the beaker was filled with warm water for heat transfer. The metal beakers were placed into the beaker dyeing system LABOMAT, Mathis AG. The reaction mixture was rotated for 6 hours at 40 rpm at the indicated temperature.

After the indicated time the cellulose was filtered off on a glass filter, washed with 5x 20 ml soft water and 3 x 10 ml acetone and dried on air. The DP of the cellulose sample was then determined according to DIN 54270.

When *endo*-acting cellulase (EC Number 3.2.1.4, NS59006, Novozymes, process conditions: 4% on sample weight, 500mM phosphate buffer, pH 7.0, 45°C) is used as the enzyme, without 10 V4A steel balls the measured DP is 1538 (-12%). The cellulosic sample is hardly dispersed in the buffer.

When no enzyme is added to the tube, the measured DP after the treatment with the 10 V4A steel balls is 1672 (-4%). Hard clusters of fibers are formed and the cellulosic sample is not well dispersed in the buffer.

It can be concluded that only the combined action of enzyme and mechanical action on cotton waste textile results in a significant reduction of the degree of polymerization of the cellulose contained therein. The synergistic action of enzyme and mechanical action is also required to achieve a finely dispersed sample in the reaction mixture.

### Example 3: Fiber size reduction

White towels containing 90±1% cellulosic material and 10±1% polyester, were used as a substrate for milling. The fiber length before milling is equal to cotton and PET fiber length in yarn for towels (approximately 15 to 40 mm). The fiber length after milling is equal to the screen of the mill. In this case the screen size was 4 mm. A mill from Alpine was used. Other suitable mills include Alpine Rotoplex granulator or a shredder like Alpine DuraLine. Important is a screen of the desired size (<5 mm). Even smaller fiber sizes could be realized with mills like Alpine Fine Cutting Mill AFS.

### Example 4: Effect of fiber length on dissolution of cellulose fibers in NMMO

In a typical experiment, cellulose waste fibers with different fiber length and DP 1200 - 1300 were dried for 60 minutes at 100°C. 2.0 g of the cellulose waste was stirred overnight in 50 ml demineralized water. The next morning the cellulose waste was filtered off and added into a 250 ml three necked round-bottom flask equipped with an overhead stirrer and vacuum distillation equipment. 40 g of a NMMO solution in water (50 wt.%) and 10 mg of propylgallate were added into the flask. The mixture was stirred at low speed and heated to 100°C. The water in the mixture was distilled off by the use of a variable under pressure.

The final percentage of cellulose in NMMOxH₂O was: 2 g cellulose in 23 g NMMOxH₂O = ∼8%.

### Results:

For the fiber length of 20 - 50 mm: winding of the long fibers around the axis of the overhead stirrer hamper dissolving the material. This material can still be identified as fibers with naked eye and on a microscope picture that was taken from the solution.

For the fiber length of <4 mm: the material is finely dispersed in the NMMO solution. After dissolution the solution is homogeneous without solid parts. No fibers can be identified in a microscope picture.

The experiments were repeated on a larger scale.

### Method:

The solution preparation took place in a laboratory kneader, starting from an aqueous suspension of the pressed out pulp in 50 wt-% aqueous NMMO through removal of the water by means of heating, shearing and vacuum during the solution process (75 - 99°C mass temperature, 770 - 40 mbar vacuum, 5 - 15 rpm). After this dissolution step and water removal, an after-dissolution time of 1 h for further homogenization of the dope followed (90°C mass temperature, 260 mbar, 15 rpm).

Material with fiber length ≥5 mm (here: 5-20 mm) (DP 482): The preparation of 13.4% cellulose/NMMO solutions on larger scale with cellulosic material having a fiber length ≥5 mm gave rise to major problems during dissolution even causing deformation of the stirring equipment through the formation of fiber clusters in the mixture.

Material with fiber length ≤4 mm (DP 460): After enzymatic treatment of the material from the first experiment the material had a shorter fiber length ≤ 4 mm. This material caused no problems like cluster formations or winding of fibers around the stirring equipment during dissolution and showed improved processability.

## Claims

1. A method for producing regenerated cellulose fibers from cotton-containing waste textile comprising cellulose having a degree of polymerization (DP) within the range of 1500-3000, comprising the steps of:
(a) decreasing the DP of cellulose from waste cotton to under 1500 by subjecting cotton-containing waste textile to an endocellulase of the type EC 3.2.1.4 and applying mechanical energy;
(b) adding a cellulose solvent comprising N-methyl morpholine N-oxide (NMMO) or an aqueous mixture of NMMO to obtain a cellulose-containing liquid; and
(c) subjecting the cellulose-containing liquid to a cellulose spinning process to produce cellulose fibers.

2. The method according to claim 1, wherein mechanical energy is applied simultaneously with the treatment with endocellulase.

3. The method according to claim 1 or 2, wherein applying mechanical energy comprises applying a high shearing or impact energy.

4. The method according to any one of the preceding claims, wherein the cotton-containing textile comprises more than 85 wt.% cellulose, preferably α-cellulose.

5. The method according to any one of the preceding claims, wherein the textile comprises both cotton and synthetic fibers.

6. The method according to claim 5, wherein the synthetic fibers comprise polyethylene terephthalate, polypropylene and/or polyamides, preferably polyethylene terephthalate.

7. The method according to any one of the preceding claims, comprising prior to step (a) reducing the cotton-containing textile in size to a fiber size of 5 mm or less.

8. The method according to any one of the preceding claims, wherein in step (b) an anti-oxidant is added, preferably propylgallate.

9. The method according to any one of the preceding claims, wherein the cellulose solvent is N-methyl morpholine N-oxide.

10. The method according to any one of the preceding claims, wherein in step (c) the cellulose-containing liquid is pumped through spinnerets, following by washing and drying of the obtained fibers.

## Patentansprüche

1. Verfahren zum Herstellen regenerierter Cellulosefasern aus baumwollhaltigem Abfalltextil, umfassend Cellulose mit einem Polymerisationsgrad (PG) in dem Bereich von 1500 - 3000, umfassend die Schritte von:
(a) Verringern des PG von Cellulose aus Baumwollabfällen auf unter 1500, durch Aussetzen baumwollhaltigen Abfalltextils einer Endocellulase von dem Typ EC 3.2.1.4 und Anwenden mechanischer Energie;
(b) Hinzufügen eines Celluloselösungsmittels, umfassend N-Methylmorpholin-N-oxid (NMMO) oder eine wässrige Mischung von NMMO, um eine Cellulosehaltige Flüssigkeit zu erhalten; und
(c) Aussetzen der Cellulose-haltigen Flüssigkeit einem Cellulosespinnverfahren, um Cellulosefasern herzustellen.

2. Verfahren nach Anspruch 1, wobei mechanische Energie gleichzeitig mit der Behandlung mit Endocellulase angewendet wird.

3. Verfahren nach Anspruch 1 oder 2, wobei Anwenden mechanischer Energie Anwenden einer hohen Scher- oder Aufprallenergie umfasst.

4. Verfahren nach einem der vorhergehenden Ansprüche, wobei das baumwollhaltige Textil mehr als 85 Gew.-% Cellulose, vorzugsweise α-Cellulose umfasst.

5. Verfahren nach einem der vorhergehenden Ansprüche, wobei das Textil sowohl Baumwolle als auch synthetische Fasern umfasst.

6. Verfahren nach Anspruch 5, wobei die synthetischen Fasern Polyethylenterephthalat, Polypropylen und/oder Polyamide, vorzugsweise Polyethylenterephthalat umfassen.

7. Verfahren nach einem der vorhergehenden Ansprüche, umfassend vor Schritt (a) Reduzieren des baumwollhaltigen Textils in Größe auf eine Fasergröße von 5 mm oder weniger.

8. Verfahren nach einem der vorhergehenden Ansprüche, wobei in Schritt (b) ein Antioxidans, vorzugsweise Propylgallat, hinzugefügt wird.

9. Verfahren nach einem der vorhergehenden Ansprüche, wobei das Celluloselösungsmittel N-Methylmorpholin-N-oxid ist.

10. Verfahren nach einem der vorhergehenden Ansprüche, wobei in Schritt (c) die Cellulose-haltigen Flüssigkeit durch Spinndüsen gepumpt wird, gefolgt von Waschen und Trocknen der erhaltenen Fasern.

## Revendications

1. Un procédé de production de fibres de cellulose régénérée à partir de déchets textiles contenant du coton comprenant de la cellulose ayant un degré de polymérisation (DP) dans la plage de 1500 à 3000, comprenant les étapes consistant
(a) à diminuer le DP de la cellulose des déchets de coton à moins de 1 500 en soumettant les déchets textiles contenant du coton à une endocellulase du type EC 3.2.1.4 et en appliquant de l'énergie mécanique ;
(b) à ajouter un solvant cellulosique comprenant du N-méthyl morpholine N-oxyde (NMMO) ou un mélange aqueux de NMMO pour obtenir un liquide contenant de la cellulose ; et
(c) à soumettre le liquide contenant de la cellulose à un processus de filage de la cellulose pour produire des fibres de cellulose.

2. Le procédé selon la revendication 1, dans lequel l'énergie mécanique est appliquée simultanément avec le traitement à l'endocellulase.

3. Le procédé selon la revendication 1 ou 2, dans lequel l'application d'énergie mécanique comprend l'application d'une énergie de cisaillement ou d'impact élevée.

4. Le procédé selon l'une quelconque des revendications précédentes, dans lequel le textile contenant du coton comprend plus de 85% en poids. % cellulose, de préférence d'a-cellulose.

5. Le procédé selon l'une quelconque des revendications précédentes, dans lequel le textile comprend à la fois du coton et des fibres synthétiques.

6. Le procédé selon la revendication 5, dans lequel les fibres synthétiques comprennent du polyéthylène téréphtalate, du polypropylène et/ou des polyamides, de préférence du polyéthylène téréphtalate.

7. Le procédé selon l'une quelconque des revendications précédentes, comprenant avant l'étape (a) la réduction de la taille du textile contenant du coton à une taille de fibre de 5 mm ou moins.

8. Le procédé selon l'une quelconque des revendications précédentes, dans lequel à l'étape (b) est ajouté un anti-oxydant, de préférence du propylgallate.

9. Le procédé selon l'une quelconque des revendications précédentes, dans lequel le solvant cellulosique est le N-oxyde de N-méthyl morpholine.

10. Le procédé selon l'une quelconque des revendications précédentes, dans lequel à l'étape (c) le liquide contenant de la cellulose est pompé à travers des filières, suivi de lavage et séchage des fibres obtenues.
